# EUROPÄISCHE PATENTSCHRIFT

(11) **EP 2 360 003 B1**
(45) Veröffentlichungstag und Bekanntmachung des Hinweises auf die Patenterteilung: **22.04.2020**
(21) Anmeldenummer: 11001340.6
(22) Anmeldetag: 18.02.2011
(51) Int. Cl.: B29C 45/00, B29C 45/28, B29C 45/77

(54) **Verfahren und Vorrichtung zur Steuerung einer Nadelverschlussdüse eines Spritzgusswerkzeuges**
Method and device for operating a needle valve nozzle of an injection moulding tool
Procédé et dispositif de commande d'une buse d'obturateur à aiguille d'un outil de moulage par injection

(30) Priorität: 18.02.2010 DE 102010008510
(43) Veröffentlichungstag der Anmeldung: 24.08.2011
(73) Patentinhaber: Meusburger Deutschland GmbH, 68519 Viernheim (DE)
(72) Erfinder: Homes, Wolfgang, 69514 Laudenbach (DE)
(74) Vertreter: Kesselhut, Wolf

(56) Entgegenhaltungen:
- EP-A1- 2 226 173
- JP-A- 6 064 002
- JP-A- H1 142 683
- US-A1- 2002 121 713
- BRAUN P: "PRAEZISE POSITIONIEREN", PLASTVERARBEITER, HUETHIG GMBH, HEIDELBERG, DE, 1 December 2005 (2005-12-01), page 38/39, XP001155127, ISSN: 0032-1338

## Beschreibung

Die Erfindung betrifft ein Verfahren zur Steuerung einer Nadelverschlussdüse eines Spritzgusswerkzeuges gemäß dem Oberbegriff von Anspruch 1, sowie eine Vorrichtung zur Durchführung des Verfahrens gemäß dem Oberbegriff von Anspruch 6 und 8. Auf dem Gebiet der Kunststoffverarbeitung werden zur Herstellung von Kunststoffformteilen heutzutage Nadelverschlussdüsen eingesetzt, mit denen über einen Schmelzgut-Verteiler zugeführter, durch Erhitzen verflüssigter Kunststoff in eine auch als Kavität bezeichnete Spritzgussform injiziert wird, aus der das Formteil nach dem Erstarren des Kunststoffs entnommen werden kann. Verfahren und Vorrichtungen zum Betreiben von Nadelverschlussdüsen sind aus der EP 2 226 173 A1, der JP 6 064002 A, der US 2002/121713 A1 und der JP H11 42683 bekannt. Die EP 2 226 173 A1 beansprucht eine Priorität vom 06.03.2009, wurde am 08.09.2010 veröffentlicht und stellt einen Stand der Technik nach Artikel 54 (3) EPÜ, dar. Sie offenbart einen Kolben-Zylinderantrieb für Nadelverschlussdüsen, wobei beim Öffnen der Düse der Druckmittelabfluss aus dem Kolben-Zylinderantrieb gedrosselt wird. Die JP 6 064002 A offenbart ebenfalls eine Drosselung des Druckmittelabflusses beim Öffnen der Verschlussnadel. Die US 2002/121713 A1 offenbart die Verwendung von hydraulischen Servo-Ventilen oder Elektromotoren für Verschlussnadeln. Die US 2002/121713 und die JP H11 42683 offenbaren konische Abschnitte der Düse und Verschlussnadel. Üblicherweise werden dabei mehrere Nadelverschlussdüsen eingesetzt, die jeweils eine Verschlussnadel enthalten, welche durch eine Betätigungseinrichtung in Form eines doppelt wirkenden Hydraulikzylinders in axialer Richtung bewegt wird, um eine Öffnung im Gehäuse der Nadelverschlussdüse, durch welche die Kunststoffschmelze in die Kavität injiziert wird, freizugeben oder zu verschließen.

Bei einem gleichzeitigen Öffnen mehrerer Nadelverschlussdüsen entsteht hierbei das Problem, dass es beim Zusammenfluss der durch die Düsen eingeleiteten Kunststoffschmelzströme in der Kavität zu einer Bindenaht zwischen den ineinander fließenden Schmelzefronten kommen kann, die in der Regel zu optischen Mängeln und einer mechanischen Schwachstelle im fertigen Formteil führt.

Bei einem im Stand der Technik auch als Kaskaden-Spritzgießen oder sequentielles Spritzgießen bekannten Verfahren wird die Bindenaht dadurch vermieden, dass die jeweiligen Nadelverschlussdüsen nacheinander jeweils erst dann betätigt werden, wenn sich die Schmelzefront bereits vor ihrer Öffnung befindet oder sich an dieser vorbei bewegt hat, wodurch die Front der Kunststoffschmelze vom Schmelzefluss aus der nachfolgend geöffneten Nadelverschlussdüse übernommen wird.

Hierbei ergibt sich das Problem, dass der für das zuverlässige Einspritzen der Kunststoffschmelze erforderliche hohe Einspritzdruck zu Beginn an den offenen Nadelverschlussdüsen aufbaut. Dieser Einspritzdruck steht aber auch an den noch verschlossenen Nadelverschlussdüsen an. Dies führt bei den bekannten Nadelverschlussdüsen, bei denen die Betätigung der Verschlussnadeln schlagartig und innerhalb eines sehr kurzen Zeitraumes von nur wenigen Zehntelsekunden zwischen der geschlossenen Stellung und der geöffneten Stellung ohne messbare Zwischenschritte erfolgt, dazu, dass der an den bereits geöffneten Nadelverschlussdüsen anstehende Druck im Zufuhrsystem der Kunststoffschmelze schlagartig abfällt, wenn eine oder mehrere weitere Nadelverschlussdüsen geöffnet werden.

Dieser kurzzeitige schlagartige Druckabfall in der bereits in die Kavität einströmenden Kunststoffschmelze führt wiederum zu einer kurzen Stagnation der Front der Schmelze in der Kavität, was in nachteiliger Weise oftmals optische Mängel und mechanische Schwächungen im fertigen Formteil nach sich zieht.

Demgemäß ist es eine Aufgabe der vorliegenden Erfindung, ein Verfahren zu schaffen, mit welchem sich eine starke Schwankung des Druckes an den Nadelverschlussdüsen vermeiden lässt. Eine weitere Aufgabe der vorliegenden Erfindung besteht darin, eine Vorrichtung zur Durchführung des Verfahrens zu schaffen.

Diese Aufgabe wird erfindungsgemäß durch ein Verfahren und eine Vorrichtung mit den Merkmalen von Anspruch 1, 6 und 8 gelöst.

Weitere Merkmale der Erfindung sind in den Unteransprüchen enthalten.

Gemäß der Erfindung umfasst ein Spritzgusswerkzeug zum Einspritzen einer Kunststoffschmelze in eine Kavität einer Spritzgussform eine oder mehrere Nadelverschlussdüsen, die jeweils ein Düsengehäuse aufweisen, in welchem eine Verschlussnadel mit einem konischen Abschnitt durch eine Betätigungseinrichtung zwischen einer geschlossenen Stellung, in der der Fluss der Kunststoffschmelze durch die Öffnung der Nadelverschlussdüse unterbrochen ist, und einer geöffneten Stellung, in der die flüssige Kunststoffschmelze in die Kavität eingespritzt wird, bewegbar ist.

Das erfindungsgemäße Verfahren zeichnet sich dadurch aus, dass die Größe des Volumenstroms der Kunststoffschmelze während des Einspritzvorgangs gesteuert wird.

Durch den Einsatz des erfindungsgemäßen Verfahrens ergibt sich der Vorteil, dass ein übermäßiger Druckabfall, der durch ein zu Beginn des Öffnungsvorgangs der jeweiligen Nadelverschlussdüse zu schnelles Freigeben der Düsenöffnungen im gesamten Zufuhrsystem für die Kunststoffschmelze entsteht, gezielt verhindert oder zumindest dadurch verringert werden kann, dass die Geschwindigkeit der jeweiligen Verschlussnadel zu Anfang der Öffnungsbewegung gegenüber der Geschwindigkeit am Ende der Öffnungsbewegung bevorzugt reduziert ist.

Ein weiterer Vorteil des erfindungsgemäßen Verfahrens ist darin zu sehen, dass sich durch die Vermeidung einer Stagnation der Schmelzefront in der Kavität Spritzgusserzeugnisse mit einer höheren Qualität fertigen lassen.

Bei dem erfindungsgemäßen Verfahren weist die Verschlussnadel einen Öffnungswinkel im Bereich zwischen 1° und 20° bezogen auf die Längsachse der Verschlussnadel auf, und das Düsengehäuse besitzt einen Öffnungswinkel zwischen 10° und 40°. Dies führt in Verbindung mit einer verringerten und bevorzugt konstanten Bewegungsgeschwindigkeit der Verschlussnadel während des Öffnungsvorgangs zu einer weiteren Reduzierung von Druckschwankungen in der Kunststoffschmelze und zu einer Vergrößerung der Länge des von der Schmelze zu Beginn des Öffnungsvorgangs durchströmten Ringspalts, was sich wiederum vorteilhaft auf die Beibehaltung der chemischen Konsistenz der Kunststoffschmelze auswirkt.

Hierbei kann die Dauer des Öffnungsvorgangs, die bei herkömmlichen Nadelverschlussdüsen im Bereich von 0,1 bis 0,2 Sekunden für den vollen Hub der Verschlussnadel liegt, beim erfindungsgemäßen Verfahren auf eine Gesamtdauer von mehreren Sekunden, bevorzugt 2 bis 6 Sekunden, verlängert sein, wohingegen der Schließvorgang lediglich eine Dauer von bevorzugt 0,1 bis 0.3 Sekunden besitzt.

Hierdurch ergibt sich der Vorteil, dass sich der Querschnitt der von der Verschlussnadel freigegebenen Öffnung beim Bewegen der Verschlussnadel aus der geschlossenen Stellung in die geöffnete Stellung zu Beginn des Einspritzvorgangs vergleichsweise langsam und gleichmäßig vergrößert, wodurch in Folge auch der Volumenstrom der Kunststoffschmelze in der sich öffnenden Nadelverschlussdüse nur langsam zunimmt. Anders ausgedrückt entfernen sich die konischen Wandabschnitte der Verschlussnadel und des Düsengehäuses beim Bewegen der Verschlussnadel aus der geschlossenen Stellung in die geöffnete Stellung zu Anfang der Bewegung über die gesamte Länge des konischen Abschnitts hinweg gleichmäßig voneinander, was bewirkt, dass sich die durchströmte freigegebene Öffnung über eine im Vergleich zu bekannten Nadelverschlussdüsen größere Länge der Verschlussnadel hinweg erstreckt. Hierdurch wird eine bei den bekannten Nadelverschlussdüsen zu Anfang des Öffnungsvorgangs entstehende schlitzförmige scharfkantige Öffnung, deren Ausdehnung in Längsrichtung der Verschlussnadel betrachtet lediglich durch die Ausdehnung der ringförmigen Kante des Düsengehäuses im Bereich der Einspritzöffnung begrenzt wird, in vorteilhafter Weise vermieden. Eine solche scharfkantige Querschnittsöffhung führt in Verbindung mit dem vergleichsweise hohen Einspritzdruck der Kunststoffschmelze leicht zu einer nachteiligen chemischen Veränderung der Kunststoffschmelze, die wiederum Schwachstellen oder optische Fehlstellen im Formteil nach sich ziehen kann.

Bei der bevorzugten Ausführungsform des erfindungsgemäßen Verfahrens umfasst die Betätigungseinrichtung einen mit einem Druckfluid, insbesondere Hydrauliköl, aus einer zugehörigen Druckfluidquelle beaufschlagten Kolben, der in bekannter Weise in einem entsprechenden Zylinder bewegbar aufgenommen ist. Um die Bewegungsgeschwindigkeit des Kolbens beim Öffnen der Verschlussnadel zu reduzieren, ist im Kreislauf des Druckfluids eine bevorzugt einstellbare Strömungsdrossel angeordnet, welche vom Druckfluid durchströmt wird und den Volumenstrom des Druckfluids beim Bewegen der Verschlussnadel aus der geschlossenen Stellung in die geöffnete Stellung verringert.

Der Vorteil des Einsatzes einer Strömungsdrossel besteht darin, dass diese auch nachträglich vergleichsweise kostengünstig bei bestehenden Kunststoffspritzeinrichtungen nachgerüstet werden kann, und im Falle einer Drossel mit einem z.B. durch eine Stellschraube von außen her verstellbaren Strömungsquerschnitt die Bewegungsgeschwindigkeit der Verschlussnadel beim Öffnungsvorgang ohne großen Aufwand für jede Nadel separat eingestellt werden kann.

Der Drossel ist weiterhin bevorzugt eine Bypassleitung mit einem darin enthaltenen Rückschlagventil zugeordnet, über welche das Druckfluid beim Bewegen der Verschlussnadel aus der geöffneten Stellung in die geschlossene Stellung geleitet wird. Bei dieser Ausführungsform der Erfindung strömt das Druckfluid beim Öffnen der Verschlussnadel über die Drossel und beim Schließen der Verschlussnadel über das geöffnete Rückschlagventil und die strömungsmäßig nachgeordnete, parallel zur Drossel verlaufende Bypassleitung.

Dies ermöglicht es in vorteilhafter Weise, dass durch den Einsatz einer vergleichsweise kostengünstigen einstellbaren Strömungsdrossel, z.B. eine sich in den Kanal der Zu- oder Rückleitung hineinerstreckende Stellschraube, mit welcher sich der Strömungsquerschnitt des Kanals verändern lässt, sowohl ein verlangsamtes Öffnen der Nadelverschlussdüse als auch gleichzeitig ein beschleunigtes Schließen der Nadelverschlussdüse ermöglicht wird.

Als Alternative zum Einsatz einer Strömungsdrossel kann ebenfalls ein Proportionalventil in die Druckfluidleitung integriert sein, welches vom Druckfluid beim Öffnen der Nadelverschlussdüse durchströmt wird und den Volumenstrom des Druckfluids bevorzugt entsprechend einem vorgegebenen Profil steuert, welches z.B. in Form eines Kennfeldes in einer das Proportionalventil steuernden elektronischen Steuerungseinrichtung abgelegt sein kann.

Nach einem weiteren der Erfindung zugrunde liegenden Gedanken kann es hierbei vorgesehen sein, dass die Drossel oder das Proportionalventil hydraulisch, pneumatisch, elektrisch und/oder mechanisch verstellbar sind, wodurch sich die Öffnungszeit der der Drossel oder dem Proportionalventil zugeordneten Nadelverschlussdüse in vorteilhafter Weise auf einfache und zeitsparende Weise verändern lässt.

Alternativ kann es vorgesehen sein, dass die Betätigungseinrichtung einen mit der Verschlussnadel mechanisch gekoppelten Servomotor umfasst, und dass eine elektronische Steuerungseinrichtung vorgesehen ist, welche den Servomotor bei der Bewegung der Verschlussnadel aus der geschlossenen Stellung in die geöffnete Stellung gemäß einem vorgegebenen Geschwindigkeitsprofil steuert. Obgleich der Einsatz eines Servomotors in steuerungstechnischer Hinsicht vergleichsweise aufwändig ist, lässt sich hierdurch die Position und Geschwindigkeit der Verschlussnadel in sehr kurzer Zeit mit hoher Präzision einstellen.

Nach einem weiteren der Erfindung zu Grunde liegenden Gedanken umfasst eine Vorrichtung zur Durchführung des erfindungsgemäßen Verfahrens ein Düsengehäuse, in welchem eine Verschlussnadel mit einem konischen Abschnitt durch eine Betätigungseinrichtung aus einer geschlossenen Stellung, in der der Fluss der Kunststoffschmelze unterbrochen ist, in eine geöffnete Stellung, in der das flüssige Kunststoffmaterial in die Kavität eingespritzt wird, bewegbar ist. Die Betätigungseinrichtung weist hierbei einen in einem Zylinder geführten doppelt-wirkenden Kolben auf, der mit einem Druckfluid aus einer Druckfluidquelle, insbesondere einer Hydraulikquelle, beauftragt wird. Im Kreislauf des Druckfluids ist eine nachfolgend auch als Drossel bezeichnete Strömungsdrossel angeordnet, die den Volumenstrom des Druckfluids verringert, wenn die Betätigungseinrichtung die Verschlussnadel aus der geschlossenen Stellung in die geöffnete Stellung bewegt.

Bei der bevorzugten Ausführungsform der Erfindung ist der vorzugsweise einstellbaren Drossel eine Bypassleitung mit einem darin angeordneten Rückschlagventil zugeordnet, über welche das Druckfluid geleitet wird, wenn der Kolben die Verschlussnadel in die geschlossene Position bewegt. Alternativ kann anstelle eines Rückschlagventils und einer Bypassleitung auch ein Mehrwegeventil zum Einsatz gelangen, welches die Strömungswege des Druckfluids direkt umschaltet.

Durch den Einsatz einer Bypassleitung steht der volle Leitungsquerschnitt für den Fluss des Druckfluids beim Bewegen der Verschlussnadel in die geschlossene Stellung zur Verfügung, ohne dass Engstellen den Strom des Druckfluids stören. Hierdurch lässt sich die Zeitdauer, in der die Verschlussnadel in die geschlossene Position bewegt wird, bei einer vorgegebenen Größe des Kolbens und einem vorgegebenen Druck des Druckfluids in vorteilhafter Weise verkürzen.

Nach einem weiteren der Erfindung zu Grunde liegenden Gedanken ist die Drossel in der Leitung des Druckfluids angeordnet, durch die hindurch das Druckfluid beim Öffnen der Verschlussnadel aus der entsprechenden Kammer des doppelt-wirkenden Zylinders herausgeleitet wird, beispielsweise zu einem Ausgleichsbehälter. Hierdurch ergibt sich der Vorteil, dass die zweite Kammer des doppelt-wirkenden Zylinders, in die das Druckfluid zum Öffnen der Nadelverschlussdüse eingeleitet wird, von Anfang an mit dem maximalen, von der Druckfluidquelle bereit gestellten Arbeitsdruck beaufschlagt wird.

Gemäß einer alternativen Ausführungsform der Erfindung kann die Betätigungseinrichtung einen mit der Verschlussnadel mechanisch gekoppelten Servomotor umfassen, dem eine elektronische Steuerungseinrichtung zugeordnet ist, die den Servomotor bei der Bewegung der Verschlussnadel aus der geschlossenen Stellung in die geöffnete Stellung gemäß einem vorgegebenen Geschwindigkeitsprofil steuert.

Diese Ausführungsform ermöglicht in vorteilhafter Weise eine rechnergesteuerte Auswahl unterschiedlicher Geschwindigkeitsprofile, die insbesondere bei der Fertigung von unterschiedlichen Spritzgussformteilen zum Einsatz gelangen können. Beispielsweise kann hierbei nach einem ersten testweise durchgeführten Spritzgussvorgang eine Anpassung der Dauer des Öffnungsvorgangs für einige ausgewählte Nadelverschlussdüsen vorgenommen werden. Hierbei ist es von Vorteil, dass die Einstellung der Geschwindigkeitsprofile mit denen die Servomotoren angesteuert werden, beispielsweise zentral an einem Rechner vorgenommen werden kann, der bevorzugt ebenfalls eine Datenbank enthält, in der eine Vielzahl von Geschwindigkeitsprofilen für die jeweiligen Verschlussnadeln hinterlegt sind, die zur Herstellung von unterschiedlichen Formteilen eingesetzt werden.

Der konische Innenabschnitt des Gehäuses der Nadelverschlussdüse umfasst bei der erfindungsgemäßen Vorrichtung einen ersten, dem konischen Abschnitt der Verschlussnadel in der geschlossenen Stellung zugeordneten Teilabschnitt, der bezüglich der Längsachse der Verschlussnadel einen Öffnungswinkel zwischen 2° - 25° aufweist, wohingegen das Düsengehäuse einen relativen Gesamtwinkel im Bereich von 10° - 40° besitzt.

Hierbei weist der konische Abschnitt der Verschlussnadel einen Öffnungswinkel zwischen 1° und 20° auf, und das Gehäuse der Nadelverschlussdüse besitzt im Bereich des konischen Abschnitts der Verschlussnadel in der geschlossenen Stellung bezogen auf die Achse der Verschlussnadel einen Innenkonus mit einem Öffnungswinkel von 2° - 25°.

Hierdurch wird insbesondere in Verbindung mit einer zuvor beschriebenen, bevorzugt mechanisch einstellbaren Strömungsdrossel in der Rücklaufleitung eine Vorrichtung geschaffen, mit der sich der Volumenstrom zu Beginn des Öffnungsvorgangs der Nadelverschlussdüse vergleichsweise langsam erhöht und das Auftreten von scharfen Kanten in dem von der Kunststoffschmelze durchströmten, freigegebenen Bereich der Einspritzöffnung vermieden wird.

Hierbei kann es weiterhin von Vorteil sein, wenn eine Verschlussnadel mit einem vom konischen Abschnitt des Düsengehäuses abweichenden Öffnungswinkel verwendet wird, da hierdurch die zeitliche Änderung der von der Kunststoffschmelze in einem vorgegebenen Zeitintervall durchströmten Querschnittsfläche beim Öffnen und Verfahren der bevorzugt mit konstanter Geschwindigkeit bewegten Verschlussnadel in der Weise verändert wird, dass sich der Volumenstrom der eingespritzten Kunststoffschmelze zu Anfang nur sehr langsam erhöht.

Anders ausgedrückt wirkt bei der Erfindung der konische Abschnitt der Verschlussnadel mit der konischen Innengeometrie des Düsengehäuses beim Verfahren der Verschlussnadel mit im Wesentlichen konstanter Geschwindigkeit in der Weise zusammen, dass der Volumenstrom - und damit der Druckabfall in der Kunststoffschmelze - zu Beginn des Öffnungsvorgang nur sehr gering ist und auch nur sehr langsam ansteigt, und der Volumenstrom im Verlauf der Öffnungsbewegung der Verschlussnadel anschließend überproportional zum zurückgelegten Weg zunimmt.

Die überproportionale Zunahme des Volumenstroms der eingespritzten Kunststoffschmelze kann weiterhin dadurch gesteigert werden, dass der erste konische Abschnitt des Düsengehäuses, der mit dem konischen Abschnitt der Verschlussnadel zusammenwirkt, einen gegenüber dem Winkel des konischen Abschnitts der Verschlussnadel von beispielsweise 1° - 20° vergrößerten Öffnungswinkel aufweist, der in vorteilhafter Weise im Bereich von 2° bis 25° liegt.

In entsprechender Weise schließt sich an den ersten konischen Teilabschnitt des Düsengehäuses ein entsprechender zweiter konischer Teilabschnitt des Düsengehäuses an, der einen dem Öffnungswinkel des ersten Teilabschnitts angepassten Öffnungswinkel besitzt, so dass die beiden konischen Teilabschnitte zusammen einen Gesamtöffnungswinkel von 10° - 40° besitzen.

Die Erfindung wird nachfolgend mit Bezug auf die Zeichnungen anhand einer bevorzugten Ausführungsform der Vorrichtung beschrieben.

In den Zeichnungen zeigt:
- Fig. 1: eine schematische Darstellung der bevorzugten Ausführungsform der erfindungsgemäßen Vorrichtung,
- Fig. 2: eine schematische Darstellung einer weiteren Ausführungsform der erfindungsgemäßen Vorrichtung, und
- Fig. 3: eine schematische Schnittflächendarstellung des konischen Abschnitts der Verschlussnadel und des Düsengehäuses in geöffnetem Zustand.

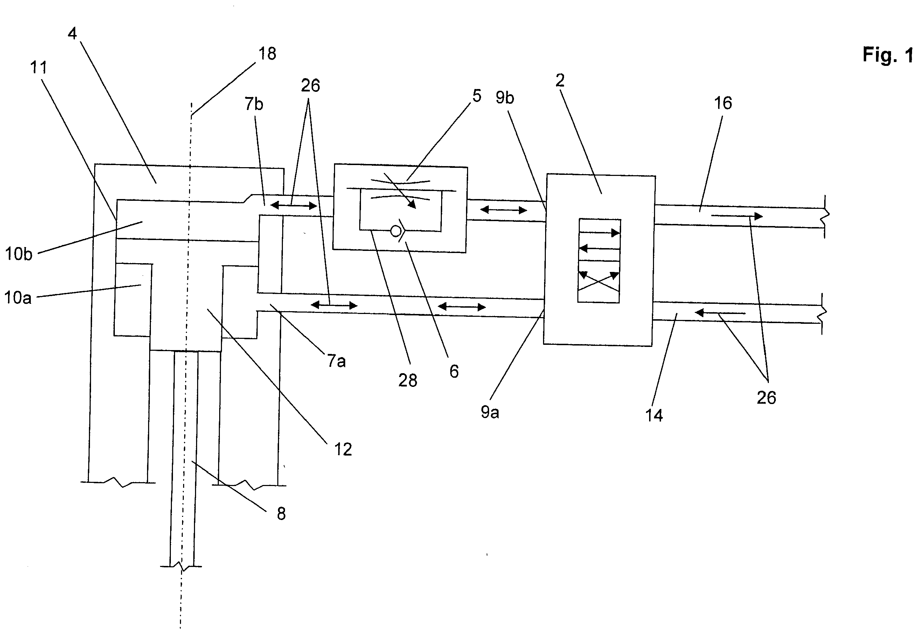

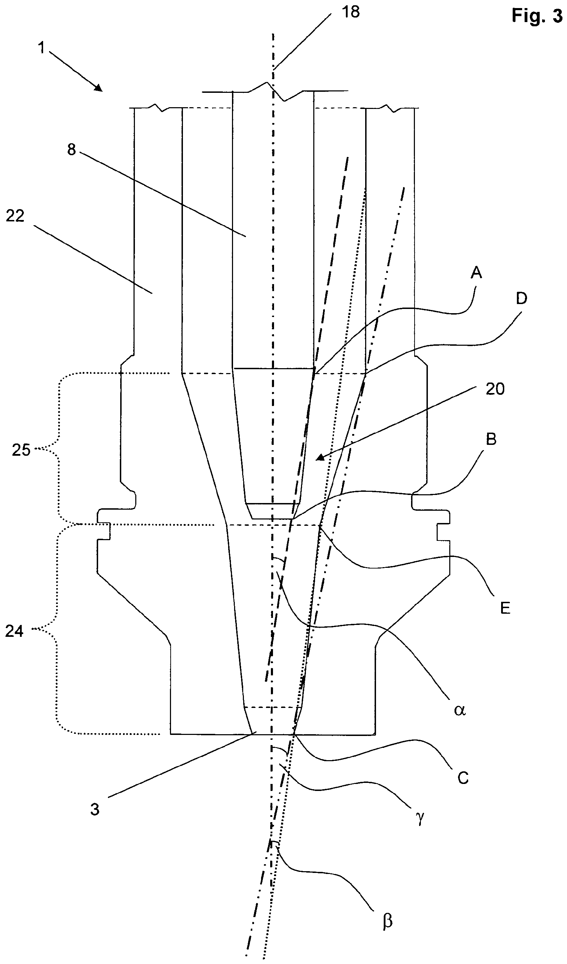

Wie in Fig. 1 gezeigt ist, umfasst eine erfindungsgemäße Vorrichtung 100 zum Einspritzen einer Kunststoffschmelze in eine Kavität einer nicht näher gezeigten Spritzgussform eine Nadelverschlussdüse 1, die ein Düsengehäuse 22 aufweist, in welchem eine Verschlussnadel 8 durch eine Betätigungseinrichtung 4 entlang einer Achse 18 aus einer geschlossenen Stellung in eine in Fig. 3 gezeigte geöffnete Stellung vor- und zurückbewegbar ist, um eine in Fig. 3 gezeigte Einspritzöffnung 3 zu öffnen oder zu verschließen. Die Betätigungseinrichtung 4 umfasst einen Zylinder 11, in dem ein doppelt-wirkender Kolben 12 aufgenommen ist, der mechanisch mit der Verschlussnadel 8 gekoppelt ist.

Gemäß der Darstellung von Fig. 1 wird der Innenraum des Zylinders 11 durch den Kolben 12 in eine erste verschlussnadelseitige Kammer 10a und eine zweite Kammer 10b unterteilt, die jeweils über einen eigenen Anschluss 7a und 7b mit einem Druckfluid 26, wie beispielsweise einem hydraulischen oder pneumatischen Medium, beaufschlagbar sind. Der Einfachheit halber wird im Folgenden von einem hydraulischen Medium 26 ausgegangen.

Zum Bewegen der Verschlussnadel 8 aus der geschlossenen Stellung in die geöffnete Stellung wird das hydraulische Medium 26, das mit hohem Druck von einer nicht näher gezeigten Hydraulikquelle, insbesondere einer Hydraulikpumpe, bereitgestellt wird, über eine Zuleitung 14 und ein Mehrwegeventil 2 dem verschlussnadelseitigen ersten Anschluss 7a zugeführt, über den es in die verschlussnadelseitige erste Kammer 10a einströmt. Hierbei ist der zugehörige Ausgang 9a des Mehrwegeventils 2 über eine entsprechende Hydraulikleitung direkt mit dem ersten Anschluss 7a verbunden, um einen möglichst ungehinderten Fluss des Hydraulikmediums 26 zu ermöglichen.

Demgegenüber ist der zweite Anschluss 7b des Zylinders 11 mit dem zweiten Ausgang 9b des Mehrwegeventils 2 über eine Strömungsdrossel 5 und ein parallel zu dieser in einer Bypassleitung 28 angeordnetes Rückschlagventil 6 verbunden, wobei das Rückschlagventil 6 in der Weise in der Bypassleitung 28 angeordnet ist, dass die Bypassleitung 28 gesperrt wird und das Hydraulikmedium 26 aus der zweiten Kammer 10b über die Strömungsdrossel 5 zum Mehrwegeventil 2 strömt, wenn die erste Kammer 10a mit Druck beaufschlagt wird, um die Verschlussnadel 8 aus der geschlossenen Stellung in die geöffnete Stellung zu bewegen. Hierbei kann die Strömungsdrossel 5 eine in den Zeichnungen nicht näher gezeigte Einstellschraube umfassen, mit der sich der Leitungsquerschnitt der Leitung, in welchem die Strömungsdrossel aufgenommen ist, vorzugsweise stufenlos verändern lässt, um den Volumenstrom des Hydraulikmediums 26 - und damit die die Bewegungsgeschwindigkeit des Kolbens 12 und der damit gekoppelten Verschlussnadel 8 auf einen gewünschten Wert reduzieren zu können.

Während des Schließvorgangs der Nadelverschlussdüse 1, der durch eine entsprechende Umschaltung des Mehrwegeventils 2 eingeleitet wird, wird das von der Hydraulikquelle über die Zuleitung 14 zugeführte Hydraulikmedium 26 durch eine entsprechende Stellung des Mehrwegeventils 2 unmittelbar der Bypassleitung 28 und der Strömungsdrossel 5 zugeleitet, wodurch sich das Rückschlagventil 6 öffnet und das Hydraulikmedium 26 an der Drossel 5 vorbei in die zweite Kammer 10b einströmen und den Kolben 12 zusammen mit der damit gekoppelten Verschlussnadel 8 in Richtung auf die in Fig. 3 angedeutete Einspritzöffnung 3 zu bewegt. Gleichzeitig wird die erste Kammer 10a des Zylinders 11 über das Mehrwegeventil 2 mit der Rücklaufleitung 16 verbunden, über die das Hydraulikmedium 26 z.B. in einen nicht näher gezeigten Vorratsbehälter zurückströmt.

Somit wird sichergestellt, dass beim Schließen der Nadelverschlussdüse 1 der gesamte in der Zuleitung 14 anstehende Druck des hydraulischen Mediums 26 genutzt wird und die Bewegungsgeschwindigkeit des Kolbens 12 und der damit gekoppelten Verschlussnadel 8 ausschließlich beim Öffnen der Nadelverschlussdüse durch die Strömungsdrossel 5 verringert wird.

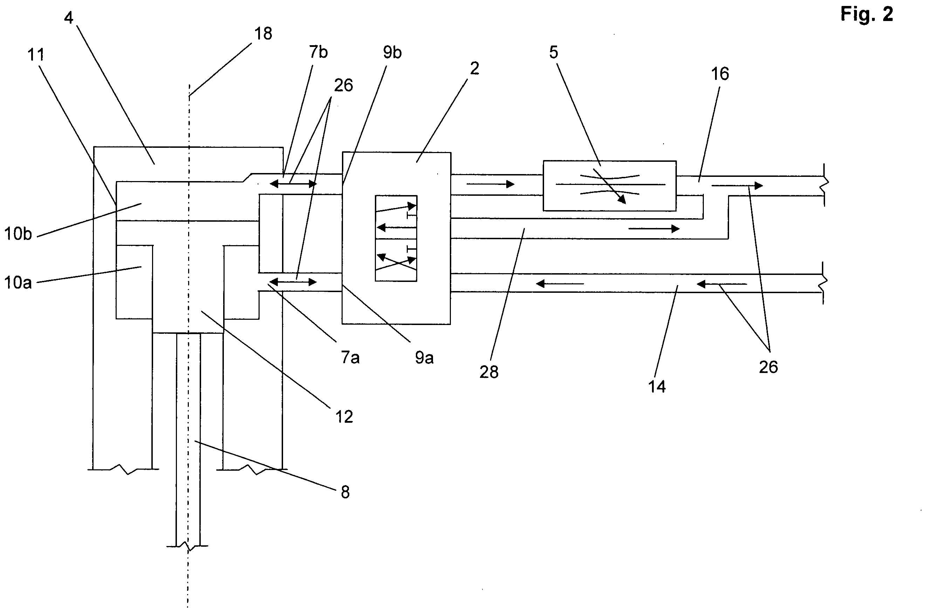

In Fig. 2 ist eine alternative Ausführungsform der erfindungsgemäßen Vorrichtung dargestellt, bei der die Drossel 5 in einem vom Kolben 12 aus betrachtet dem Mehrwegeventil 2 strömungsmäßig nachgeordneten Leitungsabschnitt angeordnet ist. Bei dieser Ausführungsform weist die Bypassleitung 28 kein Rückschlagventil 6 auf, sondern der Fluss des hydraulischen Mediums 26 durch die Bypassleitung 28, die über einen eigenen Anschluss mit dem Mehrwegeventil 2 verbundene ist, wird von dem Mehrwegeventil 2 - welches hier bevorzugt als ein 5/2-Mehrwegeventil ausgestaltet, ist - freigegeben oder gesperrt.

Gemäß der Darstellung von Fig. 2 wird bei dieser Ausführungsform der Erfindung die Zuleitung 14 beim Öffnen der Nadelverschlussdüse 1 unmittelbar mit dem Anschluss 7a verbunden und der der Bypassleitung 28 zugeordnete Ausgang des Mehrwegeventils 2 gesperrt. Gleichzeitig wird der Anschluss 7b der zweiten Kammer 10b des Zylinders 4 strömungsmäßig mit dem Leitungsabschnitt verbunden, in dem die Strömungsdrossel 5 angeordnet ist, so dass das hydraulische Medium 26 durch die Drossel 5 hindurch in die Rücklaufleitung 16 strömt und dadurch der Volumenstrom des hydraulischen Mediums 26 entsprechend verringert wird. Da sich hierdurch entsprechend auch die Bewegungsgeschwindigkeit des Kolbens 12 und der damit gekoppelten Verschlussnadel 8 verringert, nimmt der Öffnungsquerschnitt der in Fig. 3 gezeigten Einspritzöffnung 3 entsprechend langsamer zu, was zu einer Reduzierung des Druckabfalls im Zuleitungssystem für die flüssige Kunststoffschmelze führt.

Die Form der Verschlussnadel 8 sowie des zugehörigen Düsengehäuses 22 wird nachfolgend mit Bezugnahme auf Fig. 3 beschrieben, die eine Schnittdarstellung des konischen Abschnitts 20 der Verschlussnadel 8 und des Düsengehäuses 22 in Höhe der Längsachse 18 der Verschlussnadel 8 zeigt.

Wie der Darstellung von Fig. 3 dabei im Detail zu entnehmen ist, weist der konische Abschnitt 20 der Verschlussnadel 8 einen relativen Gesamtwinkel α im Bereich von 1° - 20° auf. Der Winkel α wird dabei durch die Längsachse 18 der Verschlussnadel 8 und die durch die beiden äußeren Eckpunkte A und B des konischen Abschnitts 20 verlaufende gestrichelte Gerade aufgespannt.

Das Düsengehäuse 22 weist wie in Fig. 3 dargestellt einen ersten konischen Abschnitt 24 auf, der einen Öffnungswinkel β im Bereich von 2° bis 25° aufweist und mit der gepunkteten Gerade durch die Eckpunkte C und E in der Zeichnung von Fig. 3 dargestellt ist. Dieser erste konische Abschnitt 24 wirkt mit dem konischen Abschnitt 22 der Verschlussnadel 8 derart zusammen, dass die Einspritzöffnung 3 der Nadelverschlussdüse 1 durch die Verschlussnadel 8 in einer nicht dargestellten geschlossenen Stellung verschlossen wird und sich der Öffnungsquerschnitt der Nadelverschlussdüse 1 zu Beginn der Bewegung der Verschlussnadel 8 aus der geschlossenen in die geöffnete Stellung sehr langsam ändert und ab dem Punkt an dem die Verschlussnadel 8 den Bereich des konischen Abschnitts 24 verlassen hat, stärker mit dem zurückgelegten Weg der Verschlussnadel 8 zunimmt.

Dem ersten konischen Abschnitt 24 des Düsengehäuses 22 ist einer zweiter konischer Abschnitt 25 nachgeordnet, der den maximalen Öffnungsquerschnitt des ersten konischen Abschnitts 24 an den zylindrischen Querschnitt des Düsengehäuses 22 angleicht. Der Winkel des zweiten konischen Abschnitts 25 des Düsengehäuses 22 ist hierbei so gewählt, dass der erste und zweite konische Abschnitt 24, 25 zusammen einen Gesamtöffnungswinkel γ im Bereich von 10° - 40° besitzen. Dieser Gesamtöffnungswinkel γ wird in der Darstellung von Fig. 3 zwischen der Achse 18 und der eingezeichneten strichpunktierten Geraden durch die Punkte C und D definiert.

### Liste der Bezugszeichen

- 1: Nadelverschlussdüse
- 2: Mehrwegeventil
- 3: Einspritzöffnung
- 4: Betätigungseinrichtung
- 5: Drossel
- 6: Rückschlagventil
- 7a: erster Anschluss
- 7b: zweiter Anschluss
- 8: Verschlussnadel
- 9a: erster Ausgang des Mehrwegeventils
- 9b: zweiter Ausgang des Mehrwegeventils
- 10a: erste Kammer
- 10b: zweite Kammer
- 11: Zylinder
- 12: Kolben
- 14: Zuleitung
- 16: Rücklaufleitung
- 18: Achse der Verschlussnadel
- 20: konischer Abschnitt der Verschlussnadel
- 22: Düsengehäuse
- 24: erster konischer Abschnitt des Düsengehäuses
- 25: zweiter konischer Abschnitt des Düsengehäuses
- 26: Druckfluid / hydraulisches Medium
- 28: Bypassleitung
- 100: erfindungsgemäße Vorrichtung
- α: Winkel
- β: Winkel
- γ: Winkel

- A: Punkt/ Eckpunkt
- B: Punkt / Eckpunkt
- C: Punkt / Eckpunkt
- D: Punkt / Eckpunkt
- E: Punkt / Eckpunkt

## Patentansprüche

1. Verfahren zum Einspritzen einer Kunststoffschmelze in eine Kavität einer Spritzgussform, mit einer Nadelverschlussdüse (1) die ein Düsengehäuse (22) aufweist, in welchem eine Verschlussnadel (8) mit einem konischen Abschnitt (20) durch eine Betätigungseinrichtung (4) zwischen einer geschlossenen Stellung, in der der Fluss der Kunststoffschmelze unterbrochen ist, und einer geöffneten Stellung, in welcher die flüssige Kunststoffschmelze in die Kavität eingespritzt wird, bewegbar ist, wobei der Volumenstrom der Kunststoffschmelze während des Einspritzvorgangs gesteuert wird,
**dadurch gekennzeichnet,**
**dass** die Geschwindigkeit der Bewegung der Verschlussnadel (8) beim Öffnungsvorgang geringer ist als beim Schließvorgang und
**dass** das Düsengehäuse (22) einen konischen Innenabschnitt aufweist, der einen dem konischen Abschnitt (20) der Verschlussnadel (8) zugeordneten und mit diesem in der geschlossenen Stellung zusammenwirkenden ersten konischen Abschnitt (24) umfasst, der bezüglich der Längsachse (18) der Verschlussnadel (8) einen Öffnungswinkel zwischen 2° - 25° aufweist und an den sich ein zweiter konischer Abschnitt (25) anschließt, wobei
der konische Abschnitt (20) der Verschlussnadel (8) einen durch die Längsachse (18) der Verschlussnadel (8) und eine durch die beiden äußeren Eckpunkte (A, B) des konischen Abschnitts (20) verlaufende Gerade aufgespannten relativen Gesamtwinkel (a) zwischen 1° und 20° aufweist, und der erste und zweite konische Innenabschnitt (24, 25) des Düsengehäuses (22) bezüglich der Längsachse (18) zusammen einen Gesamtöffnungswinkel (γ) im Bereich von 10° - 40° aufweisen.

2. Verfahren nach Anspruch 1,
**dadurch gekennzeichnet,**
**dass** die Betätigungseinrichtung (4) einen mit einem Druckfluid (26) aus einer Druckfluidquelle beaufschlagten Kolben (12) umfasst, und dass dem Kreislauf des Druckfluids (26) eine Drossel (5) oder ein Proportionalventil zugeordnet ist, welche den Volumenstrom des Druckfluids (26) beim Bewegen der Verschlussnadel (8) aus der geschlossenen Stellung in die geöffnete Stellung verringert.

3. Verfahren nach Anspruch 2,
**dadurch gekennzeichnet,**
**dass** der Drossel (5) eine Bypassleitung (28) mit einem darin enthaltenen Rückschlagventil (6) zugeordnet ist, über welche das Druckfluid (26) beim Bewegen der Verschlussnadel (8) aus der geöffneten Stellung in die geschlossene Stellung geleitet wird.

4. Verfahren nach Anspruch 2 oder 3,
**dadurch gekennzeichnet,**
**dass** die Drossel (5) oder das Proportionalventil hydraulisch, pneumatisch, elektrisch und/oder mechanisch verstellbar ist.

5. Verfahren nach Anspruch 1,
**dadurch gekennzeichnet,**
**dass** die Betätigungseinrichtung (4) einen mit der Verschlussnadel (8) mechanisch gekoppelten Servomotor umfasst, und dass eine elektronische Steuerungseinrichtung vorgesehen ist, welche den Servomotor bei der Bewegung der Verschlussnadel (8) aus der geschlossenen Stellung in die geöffnete Stellung gemäß einem vorgegebenen Geschwindigkeitsprofil steuert.

6. Vorrichtung zur Durchführung des Verfahrens nach Anspruch 1, mit einer Nadelverschlussdüse (1) die ein Düsengehäuse (22) aufweist, in welchem eine Verschlussnadel (8) mit einem konischen Abschnitt (20) durch eine Betätigungseinrichtung (4) zwischen einer geschlossenen Stellung, in der der Fluss der Kunststoffschmelze unterbrochen ist, und einer geöffneten Stellung, in der die flüssige Kunststoffschmelze in die Kavität eingespritzt wird, bewegbar ist, wobei die Betätigungseinrichtung (4) einen mit einem Druckfluid (26) aus einer Druckfluidquelle beaufschlagten doppelt-wirkenden Kolben (12) umfasst,
wobei dem Kreislauf des Druckfluids (26) eine Drossel (5) zugeordnet ist, welche den Volumenstrom des Druckfluids (26) beim Bewegen der Verschlussnadel (8) aus der geschlossenen Stellung in die geöffnete Stellung verringert, **dadurch gekennzeichnet, dass** das Düsengehäuse (22) einen konischen Innenabschnitt aufweist, der einen dem konischen Abschnitt (20) der Verschlussnadel (8) zugeordneten und mit diesem in der geschlossenen Stellung zusammenwirkenden ersten konischen Abschnitt (24) umfasst, der bezüglich der Längsachse (18) der Verschlussnadel (8) einen Öffnungswinkel zwischen 2° - 25° aufweist und an den sich ein zweiter konischer Abschnitt (25) anschließt, wobei
der konische Abschnitt (20) der Verschlussnadel (8) einen durch die Längsachse (18) der Verschlussnadel (8) und eine durch die beiden äußeren Eckpunkte (A, B) des konischen Abschnitts (20) verlaufende Gerade aufgespannten relativen Gesamtwinkel (a) zwischen 1° und 20° aufweist, und der erste und zweite konische Innenabschnitt (24, 25) des Düsengehäuses (22) bezüglich der Längsachse (18) zusammen einen Gesamtöffnungswinkel im Bereich von 10° - 40° aufweisen.

7. Vorrichtung nach Anspruch 6,
**dadurch gekennzeichnet,**
**dass** der Drossel (5) eine Bypassleitung (28) zugeordnet ist, welche über ein Rückschlagventil (6) oder ein Mehrwegeventil (2) freigegeben wird.

8. Vorrichtung zur Durchführung des Verfahrens nach Anspruch 1, mit einer Nadelverschlussdüse (1) die ein Düsengehäuse (22) aufweist, in welchem eine Verschlussnadel (8) mit einem konischen Abschnitt (20) durch eine Betätigungseinrichtung (4) zwischen einer geschlossenen Stellung, in der der Fluss der Kunststoffschmelze unterbrochen ist, und einer geöffneten Stellung, in der die flüssige Kunststoffschmelze in die Kavität eingespritzt wird, bewegbar ist, **dadurch gekennzeichnet,**
**dass** die Betätigungseinrichtung (4) einen mit der Verschlussnadel (8) mechanisch gekoppelten Servomotor umfasst, und dass eine elektronische Steuerungseinrichtung vorgesehen ist, durch welche der Servomotor bei der Bewegung der Verschlussnadel (8) aus der geschlossenen Stellung in die geöffnete Stellung gemäß einem vorgegebenen Geschwindigkeitsprofil in der Weise steuerbar ist, dass die Geschwindigkeit der Bewegung der Verschlussnadel (8) beim Öffnungsvorgang geringer ist als beim Schließvorgang, und
**dass** das Düsengehäuse (22) einen konischen Innenabschnitt aufweist, der einen dem konischen Abschnitt (20) der Verschlussnadel (8) zugeordneten und mit diesem in der geschlossenen Stellung zusammenwirkenden ersten konischen Abschnitt (24) umfasst, der bezüglich der Längsachse (18) der Verschlussnadel (8) einen Öffnungswinkel zwischen 2° - 25° aufweist und an den sich ein zweiter konischer Abschnitt (25) anschließt, wobei
der konische Abschnitt (20) der Verschlussnadel (8) einen durch die Längsachse (18) der Verschlussnadel (8) und eine durch die beiden äußeren Eckpunkte (A, B) des konischen Abschnitts (20) verlaufende Gerade aufgespannten relativen Gesamtwinkel (a) zwischen 1° und 20° aufweist, und der erste und zweite konische Innenabschnitt (24, 25) des Düsengehäuses (22) bezüglich der Längsachse (18) zusammen einen Gesamtöffnungswinkel im Bereich von 10° - 40° aufweisen.

## Claims

1. Method for injecting a molten plastic into a cavity of an injection mould, with a needle valve nozzle (1), which has a nozzle casing (22), in which a shut-off needle (8) with a conical portion (20) can be moved by an actuating device (4) between a closed position, in which the flow of the molten plastic is interrupted, and an opened position, in which the liquid molten plastic is injected into the cavity, wherein the volumetric flow of the molten plastic is controlled during the injection process,
**characterized**
**in that** the speed of movement of the shut-off needle (8) is lower during the opening operation than during the closing operation and
**in that** the nozzle casing (22) has a conical inner portion, which comprises a first conical portion (24), which is assigned to the conical portion (20) of the shut-off needle (8) and interacts with the latter in the closed position and which has with respect to the longitudinal axis (18) of the shut-off needle (8) an opening angle of between 2° and 25° and is adjoined by a second conical portion (25), wherein
the conical portion (20) of the shut-off needle (8) has a relative total angle (α), defined by the longitudinal axis (18) of the shut-off needle (8) and a straight line running through the two outer corner points (A, B) of the conical portion (20), of between 1° and 20°, and the first and second conical inner portions (24, 25) of the nozzle casing (22) together have with respect to the longitudinal axis (18) a total opening angle (γ) in the range of 10° - 40°.

2. Method according to Claim 1,
**characterized**
**in that** the actuating device (4) comprises a piston (12) acted upon by a pressure fluid (26) from a pressure fluid source, and in that the circuit of the pressure fluid (26) is assigned a throttle (5) or a proportional valve, which reduces the volumetric flow of the pressure fluid (26) during the movement of the shut-off needle (8) from the closed position into the opened position.

3. Method according to Claim 2,
**characterized**
**in that** the throttle (5) is assigned a bypass line (28) with a nonreturn valve (6) contained therein, by way of which the pressure fluid (26) is passed during the movement of the shut-off needle (8) from the opened position into the closed position.

4. Method according to Claim 2 or 3,
**characterized in that** the throttle (5) or the proportional valve is hydraulically, pneumatically, electrically and/or mechanically adjustable.

5. Method according to Claim 1,
**characterized in that** the actuating device (4) comprises a servomotor mechanically connected to the shut-off needle (8), and **in that** an electronic control device is provided, which controls the servomotor during the movement of the shut-off needle (8) from the closed position into the opened position according to a predetermined speed profile.

6. Device for carrying out the method according to Claim 1, with a needle valve nozzle (1), which has a nozzle casing (22), in which a shut-off needle (8) with a conical portion (20) can be moved by an actuating device (4) between a closed position, in which the flow of the molten plastic is interrupted, and an opened position, in which the liquid molten plastic is injected into the cavity, wherein the actuating device (4) comprises a double-acting piston (12) acted upon by a pressure fluid (26) from a pressure fluid source,
wherein a throttle (5) is assigned to the circuit of the pressure fluid (26), which reduces the volumetric flow of the pressure fluid (26) during the movement of the shut-off needle (8) from the closed position into the opened position, **characterized**
**in that** the nozzle casing (22) has a conical inner portion, which comprises a first conical portion (24), which is assigned to the conical portion (20) of the shut-off needle (8) and interacts with the latter in the closed position and which has with respect to the longitudinal axis (18) of the shut-off needle (8) an opening angle of between 2° and 25° and is adjoined by a second conical portion (25), wherein
the conical portion (20) of the shut-off needle (8) has a relative total angle (α), defined by the longitudinal axis (18) of the shut-off needle (8) and a straight line running through the two outer corner points (A, B) of the conical portion (20), of between 1° and 20°, and the first and second conical inner portions (24, 25) of the nozzle casing (22) together have with respect to the longitudinal axis (18) a total opening angle in the range of 10° - 40°.

7. Device according to Claim 6,
**characterized**
**in that** a bypass line (28) is assigned to the throttle (5) which is opened up by way of a nonreturn valve or a multi-way valve (2).

8. Device for carrying out the method according to Claim 1, with a needle valve nozzle (1), which has a nozzle casing (22), in which a shut-off needle (8) with a conical portion (20) can be moved by an actuating device (4) between a closed position, in which the flow of the molten plastic is interrupted, and an opened position, in which the liquid molten plastic is injected into the cavity, **characterized**
**in that** the actuating device (4) comprises a servomotor mechanically connected to the shut-off needle (8), and in that an electronic control device is provided, by which the servomotor can be controlled during the movement of the shut-off needle (8) from the closed position into the opened position according to a predetermined speed profile in such a way that the speed of the movement of the shut-off needle (8) is lower during the opening operation than during the closing operation, and
**in that** the nozzle casing (22) has a conical inner portion, which comprises a first conical portion (24), which is assigned to the conical portion (20) of the shut-off needle (8) and interacts with the latter in the closed position and which has with respect to the longitudinal axis (18) of the shut-off needle (8) an opening angle of between 2° and 25° and is adjoined by a second conical portion (25), wherein
the conical portion (20) of the shut-off needle (8) has a relative total angle (α), defined by the longitudinal axis (18) of the shut-off needle (8) and a straight line running through the two outer corner points (A, B) of the conical portion (20), of between 1° and 20°, and the first and second conical inner portions (24, 25) of the nozzle casing (22) together have with respect to the longitudinal axis (18) a total opening angle in the range of 10° - 40°.

## Revendications

1. Procédé d'injection d'une matière plastique fondue dans une cavité d'un moule de moulage par injection, à l'aide d'une buse à aiguille (1) qui comporte un boîtier de buse (22) dans lequel une aiguille de buse (8) pourvue d'une portion conique (20) peut être déplacée par un moyen d'actionnement (4) entre une position fermée, dans laquelle l'écoulement de la matière plastique fondue est interrompue, et une position ouverte, dans laquelle la matière plastique fondue liquide est injectée dans la cavité, le débit volumique de la matière plastique fondue étant commandé pendant le processus d'injection,
**caractérisé en ce que**
la vitesse de déplacement de l'aiguille (8) pendant le processus d'ouverture est inférieure à celle pendant le processus de fermeture et **en ce que** le boîtier de buse (22) comporte une portion intérieure conique qui comprend une première portion conique (24) qui est associée à la portion conique (20) de l'aiguille (8), qui coopère avec cette portion conique en position fermée, qui présente un angle d'ouverture compris entre 2° et 25° par rapport à l'axe longitudinal (18) de l'aiguille (8) et qui est suivie d'une deuxième portion conique (25),
la portion conique (20) de l'aiguille (8) présentant un angle total relatif (a) compris entre 1° et 20° qui est formé entre l'axe longitudinal (18) de l'aiguille (8) et une ligne droite passant par les deux points d'angle extérieurs (A, B) de la portion conique (20), et les première et deuxième portions intérieures coniques (24, 25) du boîtier de buse (22) formant conjointement, par rapport à l'axe longitudinal (18), un angle d'ouverture total (y) dans la plage de 10° à 40°.

2. Procédé selon la revendication 1,
**caractérisé en ce que**
le moyen d'actionnement (4) comprend un piston (12) soumis à un fluide sous pression (26) provenant d'une source de fluide sous pression et **en ce que** le circuit du fluide sous pression (26) est associé à un étranglement (5) ou une soupape proportionnelle qui réduit le débit volumique du fluide sous pression (26) lors du déplacement de l'aiguille (8) de la position fermée jusque dans la position ouverte.

3. Procédé selon la revendication 2,
**caractérisé en ce que**
l'étranglement (5) est associé à une conduite de dérivation (28) pourvue à l'intérieur d'une soupape anti-retour (6) qui conduit le fluide sous pression (26) lors du déplacement de l'aiguille (8) de la position ouverte jusque dans la position fermée.

4. Procédé selon la revendication 2 ou 3,
**caractérisé en ce que**
l'étranglement (5) ou la soupape proportionnelle est réglable hydrauliquement, pneumatiquement, électriquement et/ou mécaniquement.

5. Procédé selon la revendication 1,
**caractérisé en ce que**
le moyen d'actionnement (4) comprend un servomoteur accouplé mécaniquement à l'aiguille (8) et **en ce qu'**un moyen de commande électronique est prévu qui commande le servomoteur lors du déplacement de l'aiguille (8) de la position fermée jusque dans la position ouverte selon un profil de vitesse spécifié.

6. Dispositif de mise en œuvre du procédé selon la revendication 1, ledit dispositif comprenant une buse à aiguille (1) qui comporte un boîtier de buse (22) dans lequel une aiguille (8) pourvue d'une portion conique (20) peut être déplacée par un moyen d'actionnement (4) entre une position fermée, dans laquelle l'écoulement de la matière plastique fondue est interrompu, et une position ouverte dans laquelle la matière plastique fondue liquide est injectée dans la cavité,
le dispositif d'actionnement (4) comprenant un piston à double effet (12) soums à un fluide sous pression (26) provenant d'une source de fluide sous pression,
le circuit du fluide sous pression (26) étant associé à un étranglement (5) qui réduit le débit volumique du fluide sous pression (26) lors du déplacement de l'aiguille (8) de la position fermée jusque dans la position ouverte,
**caractérisé en ce que**
le boîtier de buse (22) comporte une portion intérieure conique qui comprend une première portion conique (24) qui est associée à la portion conique (20) de l'aiguille (8), qui coopère avec cette portion conique dans la position fermée, qui forme un angle d'ouverture compris entre 2° et 25° par rapport à l'axe longitudinal (18) de l'aiguille (8) et qui est suivie d'une deuxième portion conique (25),
la portion conique (20) de l'aiguille (8) présentant un angle total relatif (a) compris entre 1° et 20° qui est formé entre l'axe longitudinal (18) de l'aiguille (8) et une ligne droite passant par les deux points d'angle extérieurs (A, B) de la portion conique (20), et les première et deuxième portions intérieures coniques (24, 25) du boîtier de buse (22) formant conjointement, par rapport à l'axe longitudinal (18), un angle d'ouverture total dans la plage de 10° à 40°.

7. Dispositif selon la revendication 6,
**caractérisé en ce que**
l'étranglement (5) est associé à une conduite de dérivation (28) qui est libérée par une soupape anti-retour (6) ou une soupapes multivoies (2).

8. Dispositif de mise en œuvre du procédé selon la revendication 1, ledit dispositif comprenant une buse à aiguille (1) qui comporte un boîtier de buse (22) dans lequel une aiguille (8) pourvu d'une portion conique (20) peut être déplacée par un moyen d'actionnement (4) entre une position fermée, dans lequel l'écoulement de la matière plastique fondue est interrompu, et une position ouverte dans laquelle la matière plastique liquide fondue est injectée dans la cavité,
**caractérisé en ce que**
le moyen d'actionnement (4) comprend un servomoteur accouplé mécaniquement à l'aiguille (8) et **en ce qu'**un moyen de commande électronique est prévu qui commande le servomoteur lors du déplacement de l'aiguille (8) de la position fermée jusque dans la position ouverte selon un profil de vitesse spécifié de telle manière que la vitesse de déplacement de l'aiguille (8) pendant le processus d'ouverture soit inférieure à celle pendant le processus de fermeture et **en ce que**
le boîtier de buse (22) comporte une portion intérieure conique qui comprend une première portion conique (24) qui est associée à la portion conique (20) de l'aiguille (8), qui coopère avec cette portion conique en position fermée, qui présente un angle d'ouverture compris entre 2° et 25° par rapport à l'axe longitudinal (18) de l'aiguille (8) et qui est suivie d'une deuxième portion conique (25),
la portion conique (20) de l'aiguille (8) présentant un angle total relatif (a) compris entre 1° et 20° qui est formé entre l'axe longitudinal (18) de l'aiguille (8) et une ligne droite passant par les deux points d'angle extérieurs (A, B) de la portion conique (20), et les première et deuxième portions intérieures coniques (24, 25) du boîtier de buse (22) formant conjointement, par rapport à l'axe longitudinal (18), un angle d'ouverture total dans la plage de 10° à 40°.
